# EUROPÄISCHE PATENTSCHRIFT

(11) **EP 2 604 551 B1**
(45) Veröffentlichungstag und Bekanntmachung des Hinweises auf die Patenterteilung: **13.04.2016**
(21) Anmeldenummer: 12195232.9
(22) Anmeldetag: 03.12.2012
(51) Int. Cl.: B65G 15/36, B29D 29/06

(54) **Fördergurt, insbesondere Stahlseil-Fördergurt, mit abgeschrägten Flanken**
Conveyor belt, in particular steel cord conveyor belt, with bevelled edges
Courroie de transport, notamment courroie de transport à câble en acier, avec flancs inclinés

(30) Priorität: 12.12.2011 DE 102011056255
(43) Veröffentlichungstag der Anmeldung: 19.06.2013
(73) Patentinhaber: Phoenix Conveyor Belt Systems GmbH, 07422 Bad Blankenburg (DE)
(72) Erfinder: Küsel, Bernd, 21077 Hamburg (DE)
(74) Vertreter: Finger, Karsten

(56) Entgegenhaltungen:
- EP-A1- 0 613 843
- WO-A1-80/01902
- WO-A1-2009/016830
- BE-A- 498 889
- DE-A1-102006 030 872
- DE-B- 1 010 727
- DE-B- 1 081 654
- DE-B- 1 229 449
- DE-C1- 4 121 572
- DE-C1- 4 212 824
- FR-A1- 2 271 145
- GB-A- 161 662
- US-A- 2 696 865
- US-B1- 7 648 021

## Beschreibung

Die Erfindung betrifft einen Fördergurt mit einer tragseitigen und laufseitigen Deckplatte aus jeweils einem polymeren Werkstoff mit elastischen Eigenschaften und mit einem eingebetteten Zugträger sowie umfassend zwei Flanken.

Die tragseitige und laufseitige Deckplatte bestehen zumeist jeweils aus einer Kautschukmischung, enthaltend eine Kautschukkomponente oder einen Kautschukkomponentenverschnilt, ein Vernetzungsmittel oder ein Vernetzungssystem, umfassend ein Vernetzungsmittel und einen Beschleuniger, sowie zumeist weitere Mischungsingredienzien, insbesondere einen Füllstoff und/oder ein Verarbeitungshilfsmittel und/oder ein Alterungsschutzmittel und/oder einen Weichmacher und/oder sonstige Zusatzstoffe (z.B. Fasern, Farbpigmente). Die diesbezügliche Kautschukbasis ist insbesondere:
Naturkautschuk (NR)
Butadien-Kautschuk (BR)
Chloropren-Kautschuk (CR)
Styrol-Butadien-Kautschuk (SBR)
Nitrilkautschuk (NBR)
Butylkautschuk (IIR)
Ethylen-Propylen-Kautschuk (EPM)
Ethylen-Propylen-Dien-Kautschuk (EPDM)
SBR/NR-Verschnitt
SBR/BR-Verschnitt
NR/BR-Verschnitt

Von besonderer Bedeutung ist bislang der Kautschuktyp CR, der sich durch eine hohe Flamm-, Witterungs-und Alterungsbeständigkeit auszeichnet, insbesondere für Fördergurte mit Einsatz im Untertagebergbau. Im Übertagebergbau haben ferner NR sowie die oben erwähnten Verschnitte (DE 10 2009 043 904 A1) eine größere Bedeutung erlangt.

Bedingt durch die Vulkanisation einer Kautschukmischung der oben genannten Art erfährt der Fördergurt die erforderlichen elastischen Eigenschaften.

Als eingebettete Zugträger kommen in Fördergurtlängsrichtung verlaufende Seile aus Stahl oder Aramid zum Einsatz, wobei Seile aus Stahl von besonderer Bedeutung sind. Insbesondere in Verbindung mit Stahlseil-Fördergurten wird zwecks Schlitzschutz zusätzlich eine innerhalb der tragseitigen und/oder laufseitigen Deckplatte eingebettete Cord-Querarmierung, insbesondere eine Synthesecord-Querarmierung, beispielsweise aus Polyamid, verwendet (WO 2008/034483 A1). Der Zugträger kann auch ein textiles Flächengebilde, insbesondere ein ein- oder mehrlagiges Gewebe, beispielsweise ein Polyester-Polyamid-Gewebe, sein.

Wesentliche Bauteile einer Förderanlage mit einem Obertrum und Untertrum sind Trommeln (Antriebstrommel, Umkehrtrommel), Tragrollen und Traggerüste. Weitere Bauteile einer Förderanlage können eine Aufgabeschurre, Umlenkrollen im Bereich des Untertrums sowie Fördergurtprofile aus einem polymeren Werkstoff, beispielsweise Randprofile, sein. Viele Förderanlagen, insbesondere Großförderanlagen, werden heute zudem mit einem Überwachungssystem, beispielsweise mittels Kameraüberwachung oder Röntgenstrahlen, ausgestattet.

Zumeist erfolgt die Führung eines Fördergurtes in einer Förderanlage in geöffneter Form, und zwar im Rahmen eines gemuldeten Tragrollenstuhls. Dabei ist aus der Offenlegungsschrift DE 10 2008 045 587 A1 bekannt, bei besonders stark beanspruchten Fördergurten eine Querarmierung einzusetzen, die in Laufrichtung des Fördergurtes wenigstens zwei Gruppen von Quercorden umfasst, die sich durch eine unterschiedliche Länge in Querarmierungsrichtung auszeichnen. Ferner wird in der Offenlegungsschrift DE 10 2010 000 588 A1 ein kurvengängiger Fördergurt, insbesondere Stahlseil-Fördergurt, und eine Förderanlage hierzu vorgestellt. Hiernach ist der Zugträger ausschließlich innerhalb des Mittenbereichs des Fördergurtes angeordnet. Zudem ist wenigstens innerhalb der beiden Randbereiche des Fördergurtes ein dehnungsfähiges Gewebe oder in Fördergurtquerrichtung verlaufende dehnungsfähige Einzelcorde aus jeweils einem textilen Werkstoff im Fördergurt eingebettet, und zwar innerhalb der tragseitigen und/oder laufseitigen Deckplatte.

Gemuldete Fördergurte zeichnen sich durch eine hohe Förderleistung und einen geringen Energieverbrauch aus. Gemuldete Fördergurte müssen möglichst eben (plan) sein. Dies wird durch die gewöhnliche Bauart problemlos gewährleistet. Die Fördergurte liegen üblicherweise auf drei- oder fünfteiligen Tragrollen. Das Fördergut liegt angehäuft und ungeschützt auf der tragseitigen Deckplatte des Fördergurtes.

In den letzten 20 Jahren ist jedoch das geschlossene Fördersystem unter Einsatz eines Rohrfördergurtes entscheidend weiterentwickelt worden. Innerhalb der Ein- und Auslaufstrecke ist der Fördergurt wie bei den konventionellen Gurtförderern gemuldet. Auf der Transport- und Rücklaufstrecke schließt sich jedoch der Fördergurt und bildet eine Röhre (Rohrfördergurt, Schlauchgurt, Rollgurt). Für dieses Transportsystem werden ringförmig angeordnete Tragrollen sowie gegebenenfalls zusätzliche Korrekturrollen benötigt. Neben den konventionellen Gurtförderern zeichnet sich das geschlossene Transportbandsystem durch folgende Vorteile aus:
- es ist besonders kurvengängig;
- es hat eine besonders hohe Steigfähigkeit;
- es ist platzsparend;
- es schützt das Fördergut sowie die Umwelt, beispielsweise bei Staub oder radioaktivem Fördergut.

Wichtig ist, dass sich Rohrfördergurte leicht zu einem Kreis formen lassen, um die Bewegungswiderstände durch hohen Anpressdruck an die umgebenden Tragrollen gering zu halten. Rohrfördergurte nehmen im Lauf der Zeit durch bleibende Verformung der verarbeiteten Komponenten die runde Form an, was in der Regel vorteilhaft für die Funktion und den Energieverbrauch des Fördergurtes ist.

Hinsichtlich des diesbezüglichen Standes der Rohrfördergurttechnik wird insbesondere auf folgende Patentliteratur verwiesen:
DE 36 06 129 A1
DE 36 12 765 A1
DE 43 33 839 B4
DE 10 2009 003 552 A1
EP 0 336 385 B1

DE 1 229 449 beschreibt einen gattungsgemäßen Födergurt.

Anwendungen, in denen der Einsatz beider Fördergurtausführungen, nämlich eines Muldenfördergurtes und eines Rohrfördergurtes innerhalb bestimmter Anlagenabschnitte gefordert werden, nehmen zwischenzeitlich zu, wobei insbesondere auf folgende Beispiele verwiesen wird:
- Gewünscht ist diese gemischte Anlagenkonzeption bei der Überquerung von Flüssen und Tälern, wo wegen der Gewichtsgrenzen keine Abdeckungen der Förderanlage möglich sind. Ein Rohrfördergurt schützt das Fördermaterial wie auch die Umwelt. Das Gleiche gilt auch für windreiche Strecken.
- Nur Teilbereiche der gesamten Förderanlage liegen in Kurven. Bisher werden solche Fälle mit einer Aneinanderreihung von Muldenfördergurten und Rohrfördergurten, die mittels Fördermaterialübergaben verbunden sind, gelöst. Diese Übergabestationen sind jedoch teuer, wartungsintensiv und zudem sehr verschleißfördernd.

Hinsichtlich derartiger Förderanlagen mit einem Hybrid-Fördergurt unter Verzicht auf Übergabestationen wird insbesondere auf die nachveröffentlichte Patentanmeldung DE 10 2011 051 035.4 verwiesen.

Bei den Förderanlagen der vorgenannten Art hat der Fördergurt zwei Flanken (Gurtkanten), die senkrecht zur Tragfläche bzw. Lauffläche des Fördergurtes verlaufen.

Im Rahmen einer Weiterentwicklung besteht nun die Aufgabe der Erfindung darin, die Herstellungskosten eines Fördergurtes zu senken, der zudem weniger Energie beim Betreiben verbraucht.

Gelöst wird diese Aufgabe durch den Fördergurt nach Anspruch 1. Es bestehen folgende zwei Varianten:
- Variante A
   Die beiden Flanken des Fördergurtes sind zumindest im Bereich der tragseitigen Deckplatte bereits herstellungsbedingt abgeschrägt.
   Die Fertigung liefe dann derart ab, dass ein Keil auf die Pressenplatten während der Vulkanisation gelegt würde. Eine Formenheizung wäre auch denkbar.
- Variante B
   Der Fördergurt ist zumindest im Bereich der tragseitigen Deckplatte mit zwei Flankenprofilen aus jeweils einem polymeren Werkstoff versehen, die mit dem polymeren Basiswerkstoff des Fördergurtes einen Haftverbund bilden, insbesondere im Rahmen der Vulkanisation. Die beiden Flankenprofile sind dabei einem Verschleiß durch Abrieb ausgesetzt. Sie werden daher auch als Verschleißprofile bezeichnet. Im
   Zuge des zunehmenden Verschleißes bilden sich ebenfalls zwei abgeschrägte Flanken.
   Diese Verschleißprofile bestehen aus einer minderwertigen Polymermischung, insbesondere aus einer minderwertigen Kautschukmischung, die beispielsweise mit einem preiswerten Füllstoff oder mit Luftblasen versehen ist. Bevorzugt eingesetzt wird ein Recyclat.

Nach beiden Varianten sind die beiden Flanken in Bezug auf die senkrechte Ausrichtung der Flanke nach dem Stand der Technik in einem Winkel α von 5° bis 45°, insbesondere von 10° bis 30°, insbesondere wiederum von 15° bis 25°, abgeschrägt.

Vorteil der erfindungsgemäßen Fördergurtkontruktion nach diesen beiden Varianten ist, dass die Herstellungskosten durch weniger hochwertigen Materialverbrauch gesenkt werden. So entfallen zurzeit über 80 % der Herstellungskosten in Deutschland auf das Material. Ein Beispiel: Ein 2000 mm breiter Fördergurt mit einer 20 mm dicken tragseitigen Deckplatte und einer 1200 mm breiten ebenen Fläche in der Gurtmitte wird auf 400 mm zu beiden Seiten bis auf 5 mm an der Gurtkante abgeflacht. Dadurch ergibt sich eine Materialersparnis von 8 %.

Zugleich wird durch das geringere Gurtgewicht weniger Energie bei dem Betreiben verbraucht.

Diese neue Fördergurtkonstruktion hat keinen negativen Einfluss auf die Lebensdauer des Fördergurtes. Sie nimmt nur den üblichen Verschleiß voraus, da ein Fördergurt in der Mitte am meisten und an den Rändern am wenigsten verschleißt. Die Flankenabflachung wird so gestaltet, dass am Ende der Gurtstandzeit das Verschleißprofil etwa horizontal/eben ist.

Diese Beschreibung gilt zumeist ausschließlich für die tragseitige Deckplatte. Da es jedoch immer mehr Anlagen gibt, die Fördermaterial auch auf der ursprünglichen laufseitigen Deckplatte fördern, kann es diese Abflachung auch auf beiden Seiten des Fördergurtes geben, wobei im Bereich der Ebene des Zugträgers unverändert die Flankenausbildung nach dem Stand der Technik gilt, vor allem dann, wenn der Zugträger bis nahe an die Fördergurtkante verläuft.

Diese Ausführung gilt für Muldenfördergurte und Rohrfördergurte.

Die Erfindung wird nun anhand von Ausführungsbeispielen unter Bezugnahme auf schematische Zeichnungen näher erläutert. Es zeigen:
- Fig. 1: einen Fördergurt nach dem Stand der Technik;
- Fig. 2: einen erfindungsgemäßen Fördergurt nach der Variante A;
- Fig. 3: einen erfindungsgemäßen Fördergurt nach der Variante B.

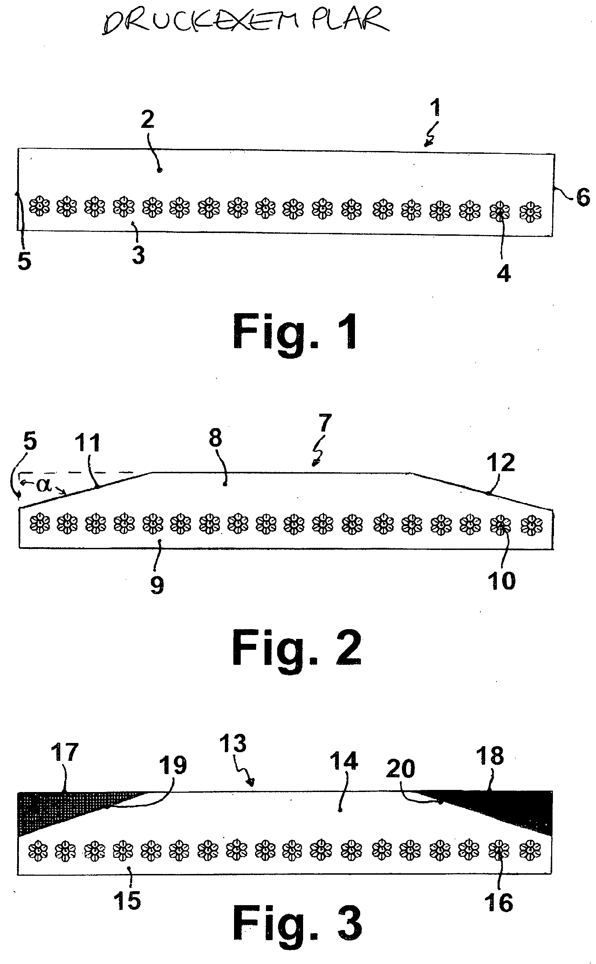

Fig. 1 zeigt einen Fördergurt 1 mit einer tragseitigen Deckplatte 2 und einer laufseitigen Deckplatte 3 aus jeweils einer vulkanisierten Kautschukmischung, beispielsweise auf der Basis von CR. Der eingebettete Zugträger 4 besteht aus mehreren parallel verlaufenden Stahlseilen. Die beiden Flanken 5 und 6 verlaufen nach dem Stand der Fördergurttechnik senkrecht zur tragseitigen und laufseitigen Deckplatte.

Fig. 2 zeigt einen Fördergurt 7 mit einer tragseitigen Deckplatte 8 und einer laufseitigen Deckplatte 9 sowie mit einem eingebetteten Zugträger 10 in Form von Stahlseilen. In Bezug auf die senkrechte Ausrichtung der Flanke 5 (Fig. 1) nach dem bisherigen Stand der Technik verlaufen die beiden Flanken 11 und 12 ausschließlich im Bereich der tragseitigen Deckplatte 8 in einem Winkel α, wobei eine Verringerung der Breite der tragseitigen Deckplatte eintritt. Diese beiden abgeschrägten Flanken haben den gleichen Winkel. Da die Materialförderung im Wesentlichen im Mittenbereich eines Fördergurtes stattfindet, hat dies keine nachteiligen Folgen auf die Förderleistung. Im Bereich der laufseitigen Deckplatte 9 sowie im Bereich der Ebene des Zugträgers 10 ist weiterhin der senkrechte Flankenverlauf nach Fig. 1 verwirklicht. Wichtig ist, dass der Zugträger im Seitenbereich stets von dem Basiswerkstoff des Fördergurtes ummantelt ist und nicht freiliegt.

Fig. 3 zeigt einen Fördergut 13 mit einer tragseitigen Deckplatte 14 und einer laufseitigen Deckplatte 15 sowie mit einem eingebetteten Zugträger 16 in Form von Stahlseilen. Der Fördergurt ist hier ausschließlich im Bereich der tragseitigen Deckplatte 14 mit zwei Flankenprofilen 17 und 18 aus jeweils einem polymeren Werkstoff versehen, die mit dem polymeren Basiswerkstoffes des Fördergurtes (hier mit der tragseitigen Deckplatte) einen Haftverbund bilden, insbesondere im Rahmen der Vulkanisation. Diese beiden Flankenprofile bestehen aus einem minderwertigen und somit preiswertigen Werkstoff, an den im Gegensatz zu dem hochwertigen Basiswerkstoff des Fördergurtes keine großen Anforderungen gestellt werden. Diese beiden Flankenprofile sind im Fördergurtbetrieb einem Verschleiß durch Abrieb ausgesetzt, indem sich zwei abgeschrägte Flanken 19 und 20 bilden. Hinsichtlich des Winkelverlaufs α wird auf die Fig. 2 verwiesen.

### Bezugszeichenliste

### (Teil der Beschreibung)

- 1: Fördergurt
- 2: tragseitige Deckplatte
- 3: laufseitige Deckplatte
- 4: Zugträger
- 5: senkrechte Flanke
- 6: senkrechte Flanke
- 7: Fördergurt
- 8: tragseitige Deckplatte
- 9: laufseitige Deckplatte
- 10: Zugträger
- 11: abgeschrägte Flanke
- 12: abgeschrägte Flanke
- 13: Fördergurt
- 14: tragseitige Deckplatte
- 15: laufseitige Deckplatte
- 16: Zugträger
- 17: Flankenprofil (Verschleißprofil)
- 18: Flankenprofil (Verschleißprofil)
- 19: abgeschrägte Flanke nach Verschleiß des Flankenprofils
- 20: abgeschrägte Flanke nach Verschleiß des Flankenprofils

## Patentansprüche

1. Fördergurt (1, 7, 13) mit einer tragseitigen Deckplatte (2, 8, 14) und einer laufseitigen Deckplatte (3, 9, 15) aus jeweils einem polymeren Basiswerkstoff mit elastischen Eigenschaften und mit einem in den Basiswerkstoff eingebetteten Zugträger (4, 10, 16), der in einem Mittenbereich des Fördergurtes (1, 7, 13) liegt, sowie umfassend zwei senkrecht zur laufseitigen Deckplatte (2, 8, 14) verlaufenden Flanken (5, 6), **dadurch gekennzeichnet, dass** die beiden Flanken (11, 12, 19, 20) des Fördergurtes (7) zumindest im Bereich der tragseitigen Deckplatte (8) bereits herstellungsedingt abgeschrägt sind, dass der Zugträger (4, 10, 16) auch in den Seitenbereichen des Fordergurtes (1, 7, 13) liegt und in den Scitenbereichen von dem Basiswerkstoff ummantelt ist und nicht freigelegt ist.

2. Fördergurt (1, 7, 13) nach Anspruch **1, dadurch gekennzeichnet, dass der** Fördergurt (13) zumindest im Bereich der tragseitigen Deckplatte (14) mit zwei Flankenprofilen (17, 18) aus jeweils einem polymeren Werkstoff versehen ist, die mit dem polymeren Basiswerkstoff des Fördergurtes einen Haftverbund bilden, wobei die beiden Flankenprofile einem Verschleiß durch Abrieb ausgesetzt sind, indem sich zwei abgeschrägte Flanken (19, 20) bilden.

3. Fördergurt nach Anspruch 2, **dadurch gekennzeichnet, dass** die beiden Flankenprofile (17, 18) aus einem Recyclat gebildet sind.

4. Fördergurt nach einem der Ansprüche 1 bis 3, **dadurch gekennzeichnet, dass** die beiden Flanken (11, 12, 19, 20) in Bezug auf die senkrechte Ausrichtung der Flanke (5, 6) in einem Winkel α von 5° bis 45° abgeschrägt sind.

5. Fördergurt nach Anspruch 4, **dadurch gekennzeichnet, dass** die beiden Flanken (11, 12, 19, 20) in Bezug auf die senkrechte Ausrichtung der Flanke (5, 6) in einem Winkel α von 10° bis 30° abgeschrägt sind.

6. Fördergurt nach Anspruch 5, **dadurch gekennzeichnet, dass** die beiden Flanken (11, 12, 19, 20) in Bezug auf die senkrechte Ausrichtung der Flanke (5, 6) in einem Winkel α von 15° bis 25° abgeschrägt sind.

7. Fördergurt nach einem der Ansprüche 1 bis 6, **dadurch gekennzeichnet, dass** die beiden abgeschrägten Flanken (11, 12, 19, 20) den gleichen Winkel haben.

8. Fördergurt nach einem der Ansprüche 1 bis 7, **dadurch gekennzeichnet, dass** die beiden abgeschrägten Flanken (11, 12, 19, 20) ausschließlich im Bereich der tragseitigen Deckplatte (8, 14) verlaufen.

9. Fördergurt nach einem der Ansprüche 1 bis 7, **dadurch gekennzeichnet, dass** die abgeschrägten Flanken im Bereich der tragseitigen Deckplatte und der laufseitigen Deckplatte verlaufen.

10. Fördergurt nach einem der Ansprüche 1 bis 9, **dadurch gekennzeichnet, dass** der Zugträger (4, 10, 16) aus Stahlseilen besteht.

## Claims

1. Conveyor belt (1, 7, 13) with a carrying-side cover sheet (2, 8, 14) and a running-side cover sheet (3, 9, 15) each made from a polymeric base material with elastic properties and with a tension member (4, 10, 16), which is embedded in the base material and lies in a middle region of the conveyor belt (1, 7, 13), and also comprising two flanks (5, 6) extending perpendicularly in relation to the running-side cover sheet (2, 8, 14), **characterized in that** the two flanks (11, 12, 19, 20) of the conveyor belt (7) are already bevelled as a result of production at least in the region of the carrying-side cover sheet (8), **in that** the tension member (4, 10, 16) also lies in the side regions of the conveyor belt (1, 7, 13) and in the side regions is enclosed by the base material and not exposed.

2. Conveyor belt (1, 7, 13) according to Claim 1, **characterized in that** the conveyor belt (13) is provided at least in the region of the carrying-side cover sheet (14) with two flank profiles (17, 18) each made from a polymeric material, which form an adhesive bond with the polymeric base material of the conveyor belt, the two flank profiles being exposed to wear due to abrasion **in that** they form two bevelled flanks (19, 20).

3. Conveyor belt according to Claim 2, **characterized in that** the two flank profiles (17, 18) are formed from a recycled material.

4. Conveyor belt according to one of Claims 1 to 3, **characterized in that** the two flanks (11, 12, 19, 20) are bevelled at an angle α of 5° to 45° with respect to the perpendicular alignment of the flank (5, 6).

5. Conveyor belt according to Claim 4, **characterized in that** the two flanks (11, 12, 19, 20) are bevelled at an angle α of 10° to 30° with respect to the perpendicular alignment of the flank (5, 6).

6. Conveyor belt according to Claim 5, **characterized in that** the two flanks (11, 12, 19, 20) are bevelled at an angle α of 15° to 25° with respect to the perpendicular alignment of the flank (5, 6).

7. Conveyor belt according to one of Claims 1 to 6, **characterized in that** the two bevelled flanks (11, 12, 19, 20) have the same angle.

8. Conveyor belt according to one of Claims 1 to 7, **characterized in that** the two bevelled flanks (11, 12, 19, 20) extend exclusively in the region of the carrying-side cover sheet (8, 14).

9. Conveyor belt according to one of Claims 1 to 7, **characterized in that** the bevelled flanks extend in the region of the carrying-side cover sheet and the running-side cover sheet.

10. Conveyor belt according to one of Claims 1 to 9, **characterized in that** the tension member (4, 10, 16) consists of steel cords.

## Revendications

1. Courroie de transport (1, 7, 13) comprenant une plaque de recouvrement côté porteur (2, 8, 14) et une plaque de recouvrement côté roulement (3, 9, 15) constituées chacune d'un matériau de base polymère ayant des propriétés élastiques et un support de traction (4, 10, 16) encastré dans le matériau de base, qui est situé dans une région centrale de la courroie de transport (1, 7, 13), et comprenant deux flancs (5, 6) s'étendant perpendiculairement à la plaque de recouvrement côté roulement (2, 8, 14), **caractérisée en ce que** les deux flancs (11, 12, 19, 20) de la courroie de transport (7), au moins dans la région de la plaque de recouvrement côté porteur (8), sont biseautés déjà du fait de la fabrication, **en ce que** le support de traction (4, 10, 16) est situé aussi dans les régions latérales de la courroie de transport (1, 7, 13) et est enveloppé dans les régions latérales par le matériau de base et n'est pas exposé.

2. Courroie de transport (1, 7, 13) selon la revendication 1, **caractérisée en ce que** la courroie de transport (13), au moins dans la région de la plaque de recouvrement côté porteur (14), est pourvue de deux profils de flanc (17, 18) constitués chacun d'un matériau polymère qui forment avec le matériau de base polymère de la courroie de transport, un assemblage par adhérence, les deux profils de flancs étant exposés à une usure par frottement, **en ce que** deux flancs biseautés (19, 20) se forment.

3. Courroie de transport selon la revendication 2, **caractérisée en ce que** les deux profils de flancs (17, 18) sont formés d'un recyclat.

4. Courroie de transport selon l'une quelconque des revendications 1 à 3, **caractérisée en ce que** les deux flancs (11, 12, 19, 20) sont biseautés par rapport à l'orientation verticale des flancs (5, 6) suivant un angle α de 5° à 45°.

5. Courroie de transport selon la revendication 4, **caractérisée en ce que** les deux flancs (11, 12, 19, 20) sont biseautés par rapport à l'orientation verticale des flancs (5, 6) suivant un angle α de 10° à 30°.

6. Courroie de transport selon la revendication 5, **caractérisée en ce que** les deux flancs (11, 12, 19, 20) sont biseautés par rapport à l'orientation verticale des flancs (5, 6) suivant un angle α de 15° à 25°.

7. Courroie de transport selon l'une quelconque des revendications 1 à 6, **caractérisée en ce que** les deux flancs biseautés (11, 12, 19, 20) présentent le même angle.

8. Courroie de transport selon l'une quelconque des revendications 1 à 7, **caractérisée en ce que** les deux flancs biseautés (11, 12, 19, 20) s'étendent exclusivement dans la région de la plaque de recouvrement côté porteur (8, 14).

9. Courroie de transport selon l'une quelconque des revendications 1 à 7, **caractérisée en ce que** les flancs biseautés s'étendant dans la région de la plaque de recouvrement côté porteur et de la plaque de recouvrement côté roulement.

10. Courroie de transport selon l'une quelconque des revendications 1 à 9, **caractérisée en ce que** le support de traction (4, 10, 16) se compose de câbles en acier.
